# EUROPÄISCHE PATENTSCHRIFT

(11) **EP 3 838 555 B1**
(45) Veröffentlichungstag und Bekanntmachung des Hinweises auf die Patenterteilung: **10.08.2022**
(21) Anmeldenummer: 19217062.9
(22) Anmeldetag: 17.12.2019
(51) Int. Cl.: B29C 63/02, B65B 11/02

(54) **VERFAHREN UND VORRICHTUNG ZUM APPLIZIEREN WENIGSTENS EINER PERFORIERTEN SCHUTZFOLIE AUF EINE OBERFLÄCHE WENIGSTENS EINES BAUTEILS**
METHOD AND DEVICE FOR APPLYING AT LEAST ONE PERFORATED PROTECTIVE FILM TO A SURFACE OF AT LEAST ONE COMPONENT
PROCÉDÉ ET DISPOSITIF D'APPLICATION D'AU MOINS UNE FEUILLE PROTECTRICE PERFORÉE À UNE SURFACE D'AU MOINS UN COMPOSANT

(43) Veröffentlichungstag der Anmeldung: 23.06.2021
(73) Patentinhaber: Somo.Tec GmbH, 18182 Bentwisch (DE)
(72) Erfinder: Mohr, Johannes, 18147 Rostock (DE); Rahmlow, Klaus-Dieter, 23992 Poischendorf (DE)
(74) Vertreter: Grünbaum, Annekathrin

(56) Entgegenhaltungen:
- WO-A2-00/59710
- DE-A1-102009 012 239
- DE-C1- 19 606 395

## Beschreibung

Die vorliegende Erfindung betrifft ein Verfahren zum Applizieren wenigstens einer perforierten Schutzfolie auf eine Oberfläche wenigstens eines Bauteils. Weiterhin befasst sich die Erfindung mit einer Vorrichtung zur Umsetzung des Verfahrens, wobei ein derartiges Verfahren und eine derartige Vorrichtung ein schnelles manuelles Auftragen einer Schutzfolie in hoher Stückzahl ermöglichen.

Insbesondere bei Karosserieteilen von Kraftfahrzeugen wird die frischlackierte Oberfläche zum Schutz für den Transport mit einer Folie abgedeckt, wobei die Folie für viele Anwendungen von Hand aufgeklebt wird, da große Karosserieteile, wie z.B. das Dach, die Haube, der Kofferraumdeckel und die Seitenflächen, in ihrer Größe und Form nicht mit nur einer Maschine beklebt werden können. Außerdem entsprechen die Folienzuschnitte nur in etwa der Form der zu schützenden Oberflächen, wobei der Zuschnitt in der Regel an der einen oder anderen Stelle, insbesondere an abgerundeten Ecken und Kanten übersteht. Das ist beim Einbau der Karosserieteile hinderlich.

In DE 19606395 C1 wird daher ein Verfahren und eine Vorrichtung zum Applizieren einer Folie auf eine Oberfläche offenbart, bei der die Folie von einer Vorratsrolle abgezogen wird, ein entsprechender Zuschnitt vor, während oder nach dem Aufbringen der Folie auf den zu schützenden Gegenstand ausgeschnitten wird und der Folienrest auf einer Haspel aufgewickelt wird.

DE 102009012239 A1 beschreibt das Applizieren einer Lackfolie auf ein Karosserieteil. Dazu wird die Lackfolie mittels einer Spanneinrichtung aufgespannt. Das Fahrzeugteil wird von unten an die Lackfolie mittels einer automatisiert gesteuerten Verfahreinrichtung herangebracht, wobei die Rückseite der Lackfolie und eine zu überziehende Vorderseite des Fahrzeugteils an mindestens einer Stelle gegeneinander drücken. Mittels einer Andrückeinrichtung wird die Lackfolie dann vollständig auf das Fahrzeugteil verbracht. Anschließend wird die Lackfolie um eine Kante des Fahrzeugteils umgeschlagen und gezielt an die Kante des Fahrzeugteils angedrückt. Während bzw. nach dem Andrücken der Lackfolie im Kantenbereich wird mittels eines Trennwerkzeugs die überschüssige Lackfolie abgetrennt.

### Darstellung der Erfindung

Der Erfindung liegt die Aufgabe zugrunde, ein Verfahren und eine Vorrichtung zu entwickeln, mit welcher eine perforierte Schutzfolie auf eine Oberfläche eines Bauteils mit unterschiedlichen Größen und/oder Krümmungen appliziert werden kann. Die Vorrichtung soll die manuelle Applikation unterstützen und das mechanische Andrücken bzw. Abschneiden der Schutzfolie ermöglichen. Die Vorrichtung soll außerdem die Möglichkeit bieten, mehrere Bauteile gleichzeitig mit einer Schutzfolie zu versehen.

Die Lösung der Aufgabe erfolgt durch ein Verfahren zum Applizieren wenigstens einer perforierten Schutzfolie auf eine Oberfläche wenigstens eines Bauteils unter Benutzung einer Vorrichtung, welche einen Grundrahmen eine Aufnahme für eine Vorratsrolle mit einer Schutzfolie, wenigstens eine Bauteilaufnahme zur Aufnahme des wenigstens einen Bauteils und eine Andrückrolle umfasst. Erfindungsgemäß werden folgende Schritte ausgeführt:
a) Einrichten der wenigstens einen Bauteilaufnahme in einem Einstellwinkel zum Grundrahmen;
b) Anordnen der Vorratsrolle mit der Schutzfolie in der Art, dass die abgewickelte Schutzfolie sich annähernd in dem gleichen Einstellwinkel zum Grundrahmen befindet;
c) Platzieren und Fixieren des wenigstens einen Bauteils;
d) Abwickeln der Schutzfolie über wenigstens eine Umlenkrolle, welche die Schutzfolie spannt, und Positionieren und Fixieren der abgewickelten Schutzfolie ohne das wenigstens eine Bauteil zu berühren;
e) Applizieren der Schutzfolie auf das wenigstens eine Bauteil mittels der Andrückrolle, welche über das wenigstens eine Bauteil geführt wird und durch wenigstens ein Gegengewicht in Position gehalten wird;
f) Abtrennen der Schutzfolie oberhalb des wenigstens einen Bauteils und Entfernen von überschüssigen Teilen der Schutzfolie;
g) Entnehmen des applizierten Bauteils von der Bauteilaufnahme.

Für eine Ausführung des Verfahrens beträgt der Einstellwinkel zwischen der Bauteilaufnahme und dem Grundrahmen zwischen 30 und 60 Grad, bevorzugt 45 Grad.

Die erfindungsgemäße Vorrichtung zum Applizieren einer perforierten Schutzfolie auf eine Oberfläche wenigstens eines Bauteils umfasst einen Grundrahmen, eine Aufnahme für eine Vorratsrolle mit einer Schutzfolie, wenigstens eine Bauteilaufnahme zur Aufnahme des wenigstens einen Bauteils und eine Andrückrolle. Erfindungsgemäß ist die Bauteilaufnahme in einem Einstellwinkel zum Grundrahmen angeordnet und es sind Mittel zur Führung der Schutzfolie in der Art angeordnet, dass die abgewickelte Schutzfolie sich annähernd in dem gleichen Einstellwinkel zum Grundrahmen befindet. Die Mittel zur Führung der Schutzfolie sind mit wenigstens einer, senkrecht auf dem Grundrahmen angeordneten Seitenstütze verbunden.

In einer Ausgestaltung ist die Bauteilaufnahme in einem Einstellwinkel zum Grundrahmen zwischen 30 und 60 Grad, bevorzugt 45 Grad, angeordnet.

In einer weiteren Ausgestaltung wird die Andrückrolle durch wenigstens ein Gegengewicht in Position oberhalb des Bauteils gehalten. Oberhalb des Bauteils befindet sich die Andrückrolle in einer Ruheposition, wobei das Gegengewicht derart dimensioniert ist, dass die Andrückrolle in jeder Position gehalten wird und sich nicht selbstständig bewegt.

In einer Ausgestaltung ist die Andrückrolle auf einer Brückenkonstruktion angeordnet, welche seitlich und im hinteren Drittel des Grundrahmens mit dem Grundrahmen schwenkbar verbunden ist. Die Drehpunkte für die Brückenkonstruktion sind entsprechend des Einstellwinkels der Bauteilaufnahme justierbar. Das wenigstens eine Gegengewicht ist an einem Gurtband über eine Umlenkung mit der Brückenkonstruktion verbunden.

In einer Ausgestaltung ist die Andrückrolle auf einem Schlitten gelagert, welcher rechts und links der Bauteilaufnahme im annähernd gleichen Einstellwinkel wie die Bauteilaufnahme auf Linearführungen geführt wird. Auf der Rückseite der Linearführungen sind jeweils Gegengewichte angeordnet, welche jeweils an einem Gurtband über eine Umlenkung mit dem Schlitten verbunden sind.

Die Vorrichtung ist einfach zu bedienen und durch die schräge Lage der zu applizierenden Bauteile kann die Schwerkraft ausgenutzt werden. Diese wirkt ebenfalls bei der Rückführung der Andruckrolle. Es können einzelne oder mehrere gleiche Bauteile appliziert werden.

Die Vorrichtung kann auch im Sitzen bedient werden, so dass sie für Menschen mit einer körperlichen Einschränkung benutzt werden kann.

### Ausführung der Erfindung

Die erfindungsgemäße Vorrichtung zum Applizieren einer Schutzfolie auf eine Oberfläche eines langgestreckten Bauteils wird anhand von Ausführungsbeispielen erläutert. Hierzu zeigen
- Figur 1: eine schematische Darstellung der erfindungsgemäßen Vorrichtung zum Applizieren einer perforierten Schutzfolie auf eine Oberfläche eines langgestreckten Bauteils,
- Figur 2: eine Hinteransicht von Figur 1,
- Figur 3: eine Seitenansicht von Figur 1 ohne Vorratsrolle und Schutzfolie,
- Figur 4: ein weiteres Ausführungsbeispiel für die erfindungsgemäße Vorrichtung,
- Figur 5: eine Hinteransicht von Figur 4,
- Figur 6: eine Seitenansicht von Figur 4 ohne Vorratsrolle und Schutzfolie und
- Figur 7: einen Applikationsvorgang anhand des ersten Ausführungsbeispiels.

In den Ausführungsbeispielen werden gleiche Teile mit den gleichen Bezugszeichen versehen. Die Basis für die Vorrichtungen in allen Ausführungsbeispielen bildet ein Grundrahmen 1, wobei dieser und dessen Anbauteile aus einem leichten Material, beispielsweise Aluminium, sind, wodurch das Gewicht niedrig gehalten werden kann und der Grundrahmen 1 somit transportierbar ist. Alle Verbindungen am Grundrahmen 1 sind Schraubverbindungen, welche lösbar sind und somit die Möglichkeit besteht, schnell und unkompliziert spezielle Änderungen für verschiedene Bauteile vorzunehmen. Die Maße in betragen in Länge/Breite/Höhe 750mm x 510mm x 1100mm, wobei diese Abmessungen sich auf die Ausführungsbeispiel beziehen und andere Abmessungen denkbar sind. Aufgrund der lösbaren Verbindungen des Grundrahmens 1 kann die Vorrichtung passend für Bauteile 5 bis zu einer Rollenbreite von 310mm eingestellt werden. Ebenso ist es möglich mehrere, nebeneinander- und/oder untereinliegende Bauteile 5 gleichzeitig zu applizieren, wobei die perforierte Schutzfolie 2 entsprechend vorbereitet sein muss.

Der Grundrahmen 1 bildet die Basis für die Vorrichtung zum Applizieren einer Schutzfolie 2 auf ein langgestrecktes Bauteil 5 und ist eine rechteckige Rahmenkonstruktion bestehend aus zwei Seitenprofilen 1.00 und jeweils einem vorderen Profil 1.01 und einem hinteren Profil 1.02. Mit dem rechten Seitenprofil 1.00 verbunden ist eine rechte Seitenstütze 1.03 senkrecht zum Grundrahmen 1 angeordnet. Am oberen Ende 1.04 der Seitenstütze 1.03 ist rechtwinklig zu dieser eine Aufnahme 3.01 für eine Vorratsrolle 3 mit der Schutzfolie 2 drehbar gelagert. Von der Vorratsrolle 3 wird die Schutzfolie 2 über ein oder mehrere Umlenkrollen 4 abgerollt und auf das langgestreckte Bauteil 5 gebracht. Die Schutzfolie 2 wird mit einer, oberhalb des Bauteils 5 angeordneten Andrückrolle 6 angedrückt. Das erfolgt händisch, könnte aber auch automatisiert erfolgen. Die Welle der Vorratsrolle 3 wird durch ein Flanschlager gelagert, wodurch ein leichtläufiges Abrollen gewährleistet wird.

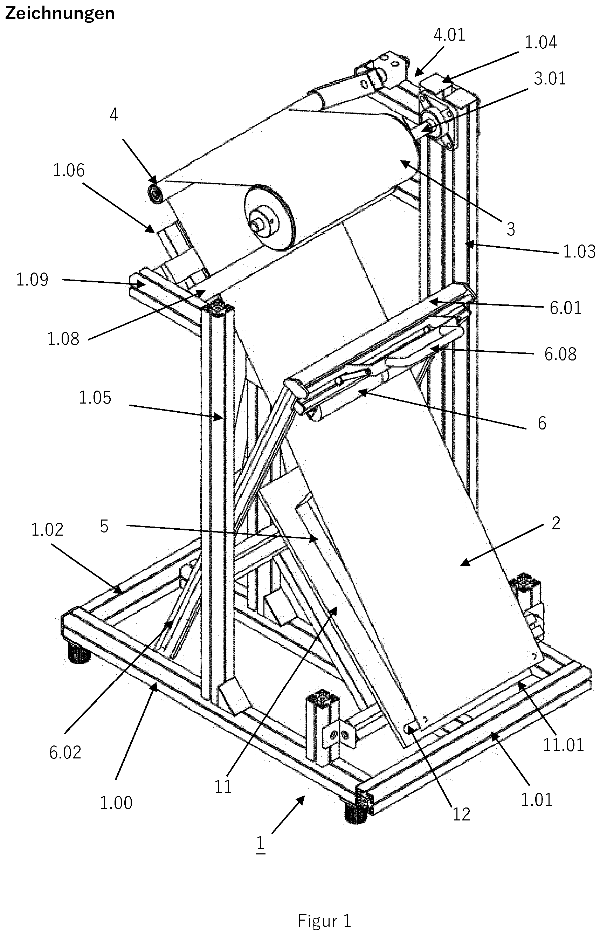

Ein erstes Ausführungsbeispiel wird in den Figuren 1 bis 3 gezeigt. Hierbei handelt sich um eine Applikationsvorrichtung zum Auftragen von perforierter Schutzfolie 2 auf die dafür vorgesehenen Bauteile 5. Die Vorrichtung ermöglicht ein schnelles manuelles Auftragen der Schutzfolie 2 in hoher Stückzahl.

Die Vorrichtung besteht hier aus dem Grundrahmen 1 mit der rechten Seitenstütze 1.03 und der Vorratsrolle 3 mit der Schutzfolie 2. Gegenüber der rechten Seitenstütze 1.03 ist senkrecht auf dem Grundrahmen 1 eine weitere, linke Seitenstütze 1.05 angeordnet, welche mit Mitteln zur Führung 1.06 der Schutzfolie 2 verbunden ist. Die Mittel zur Führung 1.06 der Schutzfolie 2 sind ebenfalls mit der rechten Seitenstütze 1.03 verbunden, so dass die Mittel zur Führung 1.06 der Schutzfolie 2 hinter der Umlenkrolle 4 und somit hinter der Schutzfolie 2 und parallel zu dieser angeordnet sind. Eine Führungsrolle 1.08 ist über zwei Halteprofile 1.09 vor den Mitteln zur Führung 1.06 der Schutzfolie 2 angeordnet. Die Führungsrolle 1.08 ist über Lagerböcke auf den Halteprofilen 1.09 einstellbar gelagert. Die Schutzfolie 2 ist unterhalb der Führungsrolle 1.08 geführt. Durch Verschieben der Führungsrolle 1.08 auf den Halteprofilen 1.09 kann der Abstand zwischen Schutzfolie 2 und Bauteil 5 eingestellt werden. Eine Bauteilaufnahme 11 ist, beginnend bei dem vorderen Profil 1.01, zwischen den Seitenstützen 1.03, 1.05 (unteres Ende 11.01 der Bauteilaufnahme 11) in einem Einstellwinkel von 45 Grad zum Grundrahmen 1 angeordnet, wobei ein Einstellwinkel zwischen 30 und 60 Grad möglich ist. Die Mittel zur Führung 1.06 der Schutzfolie 2 sind in Bezug zur Bauteilaufnahme 11 und somit zur Schutzfolie 2 in einem korrespondierenden Winkel angeordnet. An dem unteren Ende 11.01 der Bauteilaufnahme 11 sind Haltestifte 12 angeordnet, die dem Positionieren und Fixieren der abgewickelten Schutzfolie 2 dienen, wodurch ein blasenfreies Auftragen ermöglicht wird. Die Schutzfolie 2 wird über die Umlenkrolle 4 und die Führungsrolle 1.08 vor der Führung 1.06 zu den Haltestiften 12 geführt und dort fixiert.

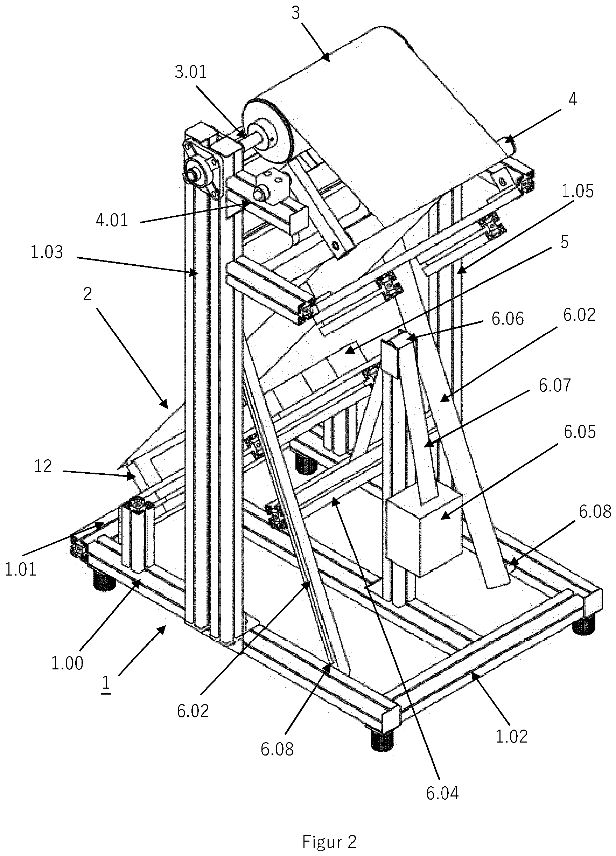

Wie in den Figuren 1 und 2 ersichtlich, ist an der rechten Seitenstütze 1.03 ein Stützarm 4.01 für eine Umlenkrolle 4 in der Art angeordnet, dass die Umlenkrolle 4 und die Vorratsrolle 3 in etwa auf einer Höhe liegen. Die Umlenkrolle 4 dient einerseits als Umlenkrolle und gleichzeitig als Spannrolle für die Schutzfolie 2. Die Umlenkrolle 4 spannt die Schutzfolie 2, so dass die Schutzfolie 2 zu Beginn des Applizierens nicht auf dem Bauteil 5 aufliegt. Die Andrückrolle 6 ist auf einer Art Brückenkonstruktion 6.01 angeordnet, welche hinter den Seitenstützen 1.03, 1.05 mit dem Grundrahmen 1 schwenkbar verbunden ist. Die Drehpunkte 6.07 für die Brückenkonstruktion 6.01 befinden sich an den zwei Seitenprofilen 1.00 im hinteren Drittel des Grundrahmens 1 und sind entsprechend des Einstellwinkels der Bauteilaufnahme 11 justierbar. Die Berechnung der Drehpunkte 6.08 erfolgt in der Art, dass ein optimales Abrollen der Andrückrolle 6 auf dem Bauteil 5 gewährleistet ist. Die Brückenkonstruktion 6.01 ermöglicht es, die Andrückrolle 6 oberhalb des Bauteils 5 zu führen. Dazu ist ein Haltegriff 6.08 oberhalb der Andrückrolle 6 mit der Brückenkonstruktion 6.01 verbunden. Die Brückenkonstruktion 6.01 wird mittels des Haltegriffs 6.08 auf die Schutzfolie 2 geschwenkt, um diese dann durch eine weitere Bewegung nach unten auf dem Bauteil 5 zu applizieren. Die Brückenkonstruktion 6.01 besteht aus zwei seitlichen Streben 6.02, der zwischen den Streben 6.02 positionierten Andruckrolle 6 und einer unterhalb des Bauteils 5 und zwischen den Streben 6.02 angeordneten Haltestrebe 6.03 für ein Gegengewicht 6.04, welches über eine Umlenkung 6.05 geführt, mittels eines Gurtbandes 6.06 mit der Haltestrebe 6.03 fest verbunden ist. Das Gegengewicht 6.04 verhindert eine ungewollte Abwärtsbewegung der Andrückrolle 6 und bewirkt gleichzeitig eine einfache Rückholung derselben nach dem Applikationsvorgang. Sobald die perforierte Schutzfolie 2 aufgetragen wurde, lässt sie sich entlang der Perforation aus ihrem Gitter lösen, d.h. überschüssige Teile der Schutzfolie 2 werden entfernt. Danach kann das Bauteil 5 aus der Vorrichtung entnommen werden.

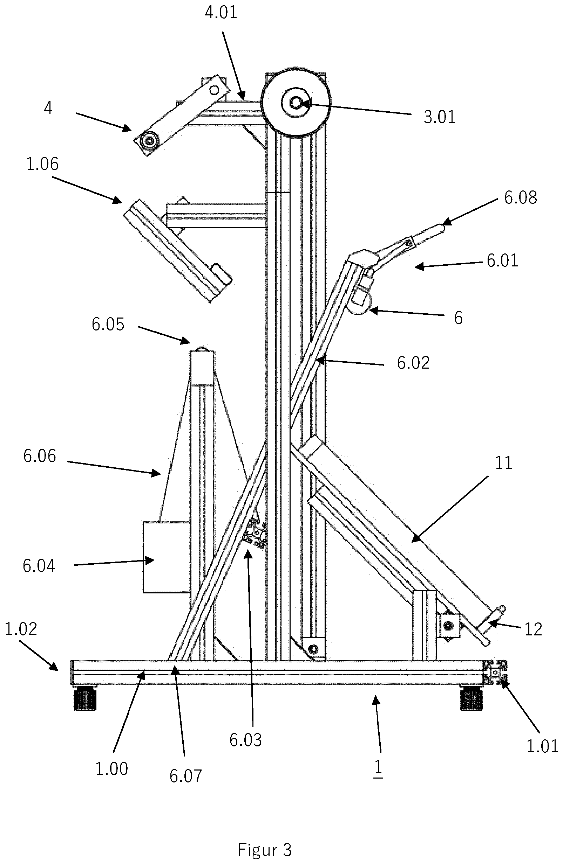

In Figur 3 wird eine Seitenansicht von Figur 1 gezeigt, hier ohne Vorratsrolle und Schutzfolie. Deutlich zu erkennen ist, dass das Mittel zur Führung 1.06 der Schutzfolie 2 nicht fluchtend aber im gleichen Einstellwinkel zur Bauteilaufnahme 11 steht. Weiterhin ist deutliche das Gegengewicht 6.04 mit dem Gurtband 6.06, welches über die Umlenkung 6.05 läuft, zu erkennen.

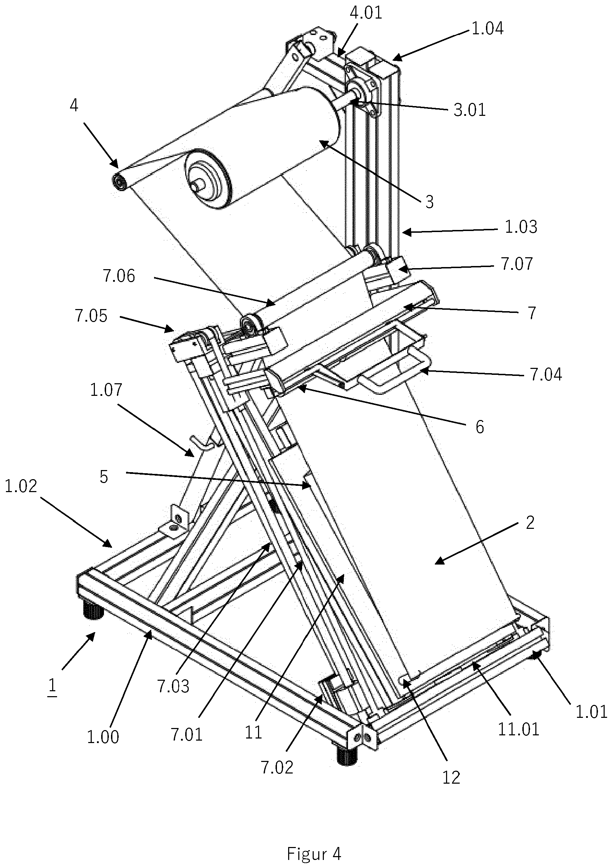

Die Figuren 4 bis 6 zeigen ein weiteres Ausführungsbeispiel für die erfindungsgemäße Vorrichtung. In diesem Ausführungsbeispiel ist anstelle der Brückenkonstruktion 6.01 für die Andruckrolle 6 eine, auf einem Schlitten 7 verfahrbare Andruckrolle 6 gezeigt.

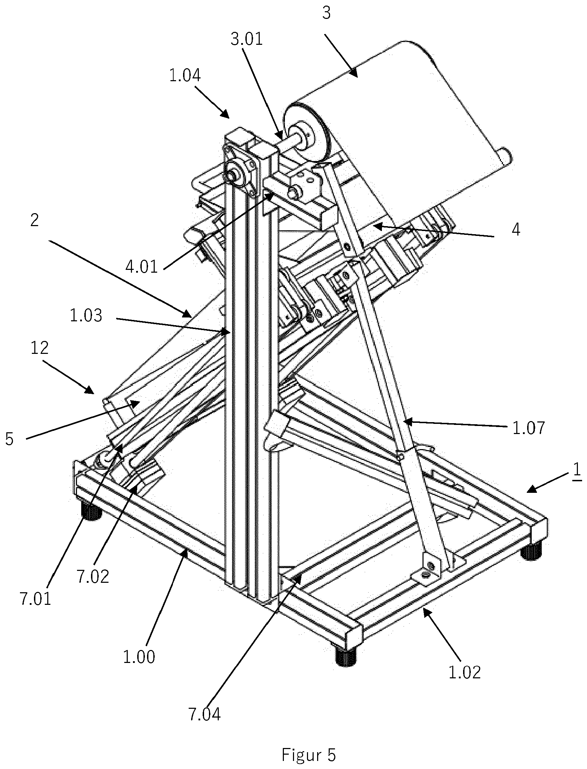

So ist in Figur 4 eine perspektivische Ansicht von vorne und in Figur 5 eine perspektivische Ansicht von hinten zu sehen. Die Vorrichtung besteht ebenfalls aus dem Grundrahmen 1 mit der rechten Seitenstütze 1.03 und der Vorratsrolle 3 mit der Schutzfolie 2. Eine Bauteilaufnahme 11 ist, beginnend bei dem vorderen Profil 1.01, neben der rechten Seitenstützen 1.03 (unteres Ende 11.01 der Bauteilaufnahme 11) in einem Einstellwinkel von 45 Grad zum Grundrahmen 1 angeordnet, wobei ein Einstellwinkel zwischen 30 und 60 Grad möglich ist. Für die Einstellung des Winkels ist eine einstellbare hintere Stütze 1.07 mit dem Grundrahmen 1 und der Bauteilaufnahme 11 verbunden und endet an dem hinteren Profil 1.02, vorzugsweise mittig. An dem unteren Ende 11.01 der Bauteilaufnahme 11 sind Haltestifte 12 angeordnet, die dem Positionieren und Fixieren der abgewickelten Schutzfolie 2 dienen, wodurch ein blasenfreies Auftragen ermöglicht wird. Die Schutzfolie 2 wird über die Umlenkrolle 4 zu den Haltestiften 12 geführt und dort fixiert.

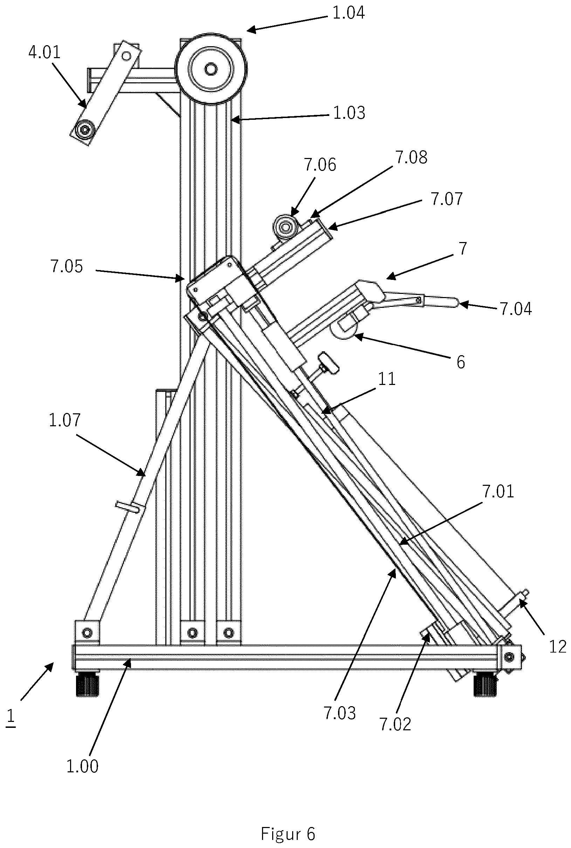

Wie in den Figuren 4 und 5 ersichtlich, ist an der rechten Seitenstütze 1.03 ein Stützarm 4.01 für eine Umlenkrolle 4 in der Art angeordnet, dass die Umlenkrolle 4 und die Vorratsrolle 3 in etwa auf einer Höhe liegen. Die Umlenkrolle 4 dient einerseits als Umlenkrolle und gleichzeitig als Spannrolle für die Schutzfolie 2. Die Umlenkrolle 4 spannt die Schutzfolie 2, so dass die Schutzfolie 2 zu Beginn des Applizierens nicht auf dem Bauteil 5 aufliegt. Eine Führungsrolle 7.06 ist oberhalb des Schlittens 7 über zwei Halteprofile 7.07 mit dem Schlitten 7 verbunden. Die Führungsrolle 7.06 ist über zwei, in Figur 6 gezeigte Lagerböcke 7.08 auf den Halteprofilen 7.07 einstellbar gelagert. Die Schutzfolie 2 ist unterhalb der Führungsrolle 7.06 geführt. Durch Verschieben der Führungsrolle 7.06 auf den Halteprofilen 7.07 kann der Abstand zwischen Schutzfolie 2 und Bauteil 5 eingestellt werden. Die Andrückrolle 6 ist auf einem Schlitten 7 gelagert. Der Schlitten 7 läuft rechts und links der Bauteilaufnahme 11 und der Schutzfolie 2 auf Linearführungen 7.01, welche etwa im gleichen Einstellwinkel wie die Bauteilaufnahme 11 eingerichtet sind. Die Bauteilaufnahme 11 und die Linearführungen 7.01 sind durch einen Rahmen verbunden, so dass immer ein gleichbleibender Verlauf zwischen der Bauteilaufnahme 11 und den Linearführungen 7.01 gewährleistet ist. Auf der Rückseite der Linearführungen 7.01 sind Gegengewichte 7.02 über jeweils ein Gurtband 7.03, welches über eine obere Umlenkung 7.05 läuft, mit dem Schlitten 7 verbunden. Der Schlitten ist mit einem Haltegriff 7.04 versehen. Die Gegengewichte 7.02 verhindern eine ungewollte Abwärtsbewegung der Andrückrolle 6 und bewirken gleichzeitig eine einfache Rückholung derselben nach dem Applikationsvorgang.

In Figur 6 ist eine Seitenansicht von Figur 4 ohne Vorratsrolle 3 und Schutzfolie 2 zu sehen.

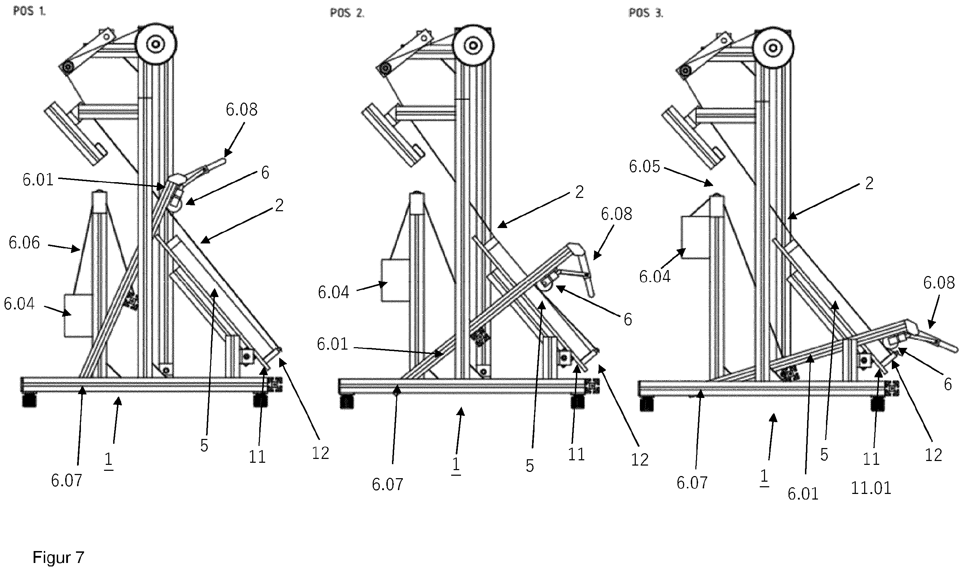

Figur 7 zeigt einen Applikationsvorgang anhand des ersten Ausführungsbeispiels, welches in den Figuren 1 bis 3 gezeigt wird. In der Position 1 ist die Vorrichtung bereit für den Applikationsvorgang, das Bauteil 5 liegt auf der Bauteilaufnahme 11, die Schutzfolie 2 ist auf den Haltestiften 12 fixiert und die Andrückrolle 6 befindet sich oberhalb des Bauteils 5. Die Andrückrolle 6 wird durch wenigstens ein Gegengewicht 6.04 in Ruheposition oberhalb des Bauteils 5 gehalten. Das Gegengewicht 6.04 ist so dimensioniert, dass die Andrückrolle 6 in jeder Position gehalten wird und somit keine Eigenbewegung der Brückenkonstruktion 6.01 möglich ist. Die Schutzfolie 2 berührt das Bauteil 5 noch nicht. Position 2 zeigt die Applikation, die Andrückrolle 6 wird mittels des Haltegriffs 6.08 nach unten gezogen. Dabei bewegt sich die Brückenkonstruktion 6.01 mit der Andruckrolle 6 in ihren Drehpunkten 6.07, gleichzeitig bewegt sich das Gegengewicht 6.04 nach oben. Dies betrifft beide Applikationsvorrichtungen. Der Vorgang ist abgeschlossen, wenn das Bauteil 5 vollständig mit der Schutzfolie 2 beschichtet ist. Position 3 zeigt, dass sich die Brückenkonstruktion 6.01 am unteren Ende 11.01 der Bauteilaufnahme befindet, das Gegengewicht 6.04 befindet sich in der Nähe der Umlenkung 6.05 für das Gurtband 6.06. Die Brückenkonstruktion 6.01 wird nun mittels des Haltegriffs 6.08 wieder nach oben geführt. Da es sich um eine perforierte Schutzfolie 2 handelt, wird diese oberhalb des Bauteils 5 abgetrennt und der überstehende Rest der Schutzfolie 2 kann entfernt werden. Das Bauteil 5 wird aus der Vorrichtung entnommen und diese ist bereit für einen weiteren Applikationsvorgang.

Der Applikationsvorgang, welcher mit einer Vorrichtung anhand des zweiten Ausführungsbeispiels, welches in den Figuren 4 bis 6 gezeigt wird, erfolgt in ähnlicher Art und Weise.

Die Beschreibung bezieht sich zwar auf ein Bauteil 5, aber die Vorrichtungen aus den Ausführungsbeispielen sind ebenso dafür geeignet, mehrere Bauteile 5 gleichzeitig mit einer Schutzfolie 2 zu versehen. Dazu werden die Bauteile 5 auf der Bauteilaufnahme 11 neben und/oder untereinander platziert. Das Bauteil 5 wird mittels Unterdruck in der Bauteilaufnahme 11 gehalten. Der Unterdruck wird mit einer, an sich bekannten Vakuumpumpe erzeugt. Die Schutzfolie 2 ist entsprechend der Lage und Anzahl der Bauteile 5 mit Perforationen versehen.

Da es sich bei den vorhergehenden, detailliert beschriebenen Vorrichtungen zum Applizieren einer Schutzfolie 2 auf eine Oberfläche eines langgestreckten Bauteils 5 um Ausführungsbeispiele handelt, können sie in üblicher Weise vom Fachmann in einem weiten Umfang modifiziert werden, ohne den Bereich der Erfindung zu verlassen. Insbesondere kann der Grundrahmen 1 in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichen

- 1: Grundrahmen
- 1.00: Seitenprofile
- 1.01: vorderes Profil
- 1.02: hinteres Profil
- 1.03: rechte Seitenstütze
- 1.04: oberes Ende der rechten Seitenstütze 1.03
- 1.05: linke Seitenstütze
- 1.06: Mittel zur Führung der Schutzfolie 2
- 1.07: hintere Stütze
- 1.08: Führungsrolle
- 1.09: Halteprofile
- 2: Schutzfolie
- 3: Vorratsrolle
- 3.01: Aufnahme
- 4: Umlenkrolle
- 4.01: Stützarm für die Umlenkrolle 4
- 5: Bauteil
- 6: Andrückrolle
- 6.01: Brückenkonstruktion
- 6.02: seitliche Streben
- 6.03: Haltestrebe
- 6.04: Gegengewicht
- 6.05: Umlenkung
- 6.06: Gurtband
- 6.07: Drehpunkte
- 6.08: Haltegriff
- 7: Schlitten
- 7.01: Linearführungen
- 7.02: Gegengewichte
- 7.03: Gurtbänder
- 7.04: Haltegriff
- 7.05: Umlenkung
- 7.06: Führungsrolle
- 7.07: Halteprofile
- 7.08: Lagerböcke
- 11: Bauteilaufnahme
- 11.01: unteres Ende der Bauteilaufnahme 11
- 12: Haltestifte

## Patentansprüche

1. Verfahren zum Applizieren wenigstens einer perforierten Schutzfolie (2) auf eine Oberfläche wenigstens eines Bauteils (5) unter Benutzung einer Vorrichtung, welche einen Grundrahmen (1), eine Aufnahme (3.01) für eine Vorratsrolle (3) mit einer Schutzfolie (2), wenigstens eine Bauteilaufnahme (11) zur Aufnahme des wenigstens einen Bauteils (5) und eine Andrückrolle (6) umfasst,
mit den Schritten:
a) Einrichten der wenigstens einen Bauteilaufnahme (11) in einem Einstellwinkel zum Grundrahmen (1);
b) Anordnen der Vorratsrolle (3) mit der Schutzfolie (2) in der Art, dass die abgewickelte Schutzfolie (2) sich annähernd in dem gleichen Einstellwinkel zum Grundrahmen (1) befindet;
c) Platzieren und Fixieren des wenigstens einen Bauteils (5);
d) Abwickeln der Schutzfolie (2) über wenigstens eine Umlenkrolle (4), welche die Schutzfolie (2) spannt, und Positionieren und Fixieren der abgewickelten Schutzfolie (2) ohne das wenigstens eine Bauteil (5) zu berühren;
e) Applizieren der Schutzfolie (2) auf das wenigstens eine Bauteil (5) mittels der Andrückrolle (6), welche über das wenigstens eine Bauteil (5) geführt wird und durch wenigstens ein Gegengewicht (6.04) in Position gehalten wird;
f) Abtrennen der Schutzfolie (2) oberhalb des wenigstens einen Bauteils (5) und Entfernen von überschüssigen Teilen der Schutzfolie (2);
g) Entnehmen des applizierten Bauteils (5) von der Bauteilaufnahme (11).

2. Verfahren nach Anspruch 1 **dadurch gekennzeichnet, dass** der Einstellwinkel zwischen der Bauteilaufnahme (11) und dem Grundrahmen (1) zwischen 30 und 60 Grad, bevorzugt 45 Grad, beträgt.

3. Vorrichtung zum Applizieren einer perforierten Schutzfolie (2) auf eine Oberfläche wenigstens eines Bauteils (5), welche einen Grundrahmen (1), eine Aufnahme (3.01) für eine Vorratsrolle (3) mit einer Schutzfolie (2), wenigstens eine Bauteilaufnahme (11) zur Aufnahme des wenigstens einen Bauteils (5) und eine Andrückrolle (6) umfasst, **dadurch gekennzeichnet, dass**
die Bauteilaufnahme (11) in einem Einstellwinkel zum Grundrahmen (1) angeordnet ist und
dass Mittel zur Führung (1.06) der Schutzfolie (2) in der Art angeordnet sind, dass die abgewickelte Schutzfolie (2) sich annähernd in dem gleichen Einstellwinkel zum Grundrahmen (1) befindet,
wobei die Mittel zur Führung (1.06) der Schutzfolie (2) mit wenigstens einer, senkrecht auf dem Grundrahmen (1) angeordneten Seitenstütze (1.03) verbunden sind.

4. Vorrichtung nach Anspruch 3 **dadurch gekennzeichnet, dass**
die Bauteilaufnahme (11) in einem Einstellwinkel zum Grundrahmen (1) zwischen 30 und 60 Grad, bevorzugt 45 Grad, angeordnet ist.

5. Vorrichtung nach Anspruch 3 oder 4 **dadurch gekennzeichnet, dass**
die Andrückrolle (6) durch wenigstens ein Gegengewicht (6.04; 7.02) in Position oberhalb des Bauteils (5) gehalten wird.

6. Vorrichtung nach einem der vorhergehenden Ansprüche 3 bis 5 **dadurch gekennzeichnet, dass**
die Andrückrolle (6) auf einer Brückenkonstruktion (6.01) angeordnet ist, welche seitlich und im hinteren Drittel des Grundrahmens (1) mit dem Grundrahmen (1) schwenkbar verbunden ist, wobei Drehpunkte (6.07) für die Brückenkonstruktion (6.01) entsprechend des Einstellwinkels der Bauteilaufnahme (11) justierbar sind.

7. Vorrichtung nach Anspruch 6 **dadurch gekennzeichnet, dass**
das wenigstens eine Gegengewicht (6.04) an einem Gurtband (6.06) über eine Umlenkung (6.05) mit der Brückenkonstruktion (6.01) verbunden ist.

8. Vorrichtung nach einem der vorhergehenden Ansprüche 3 bis 5 **dadurch gekennzeichnet, dass**
die Andrückrolle (6) auf einem Schlitten (7) gelagert ist, welcher rechts und links der Bauteilaufnahme (11) im annähernd gleichen Einstellwinkel wie die Bauteilaufnahme (11) auf Linearführungen (7.01) geführt wird und dass eine Führungsrolle (7.06) oberhalb des Schlittens (7) einstellbar gelagert ist,
wobei die Schutzfolie (2) unterhalb der Führungsrolle 7.06 geführt ist und durch Verschieben der Führungsrolle (7.06) der Abstand zwischen Schutzfolie (2) und Bauteil (5) eingestellt wird.

9. Vorrichtung nach Anspruch 8 **dadurch gekennzeichnet, dass**
auf der Rückseite der Linearführungen (7.01) jeweils Gegengewichte (7.02) angeordnet sind, welche jeweils an einem Gurtband (7.03) über eine Umlenkung (7.05) mit dem Schlitten (7) verbunden sind.

## Claims

1. Method for applying at least one perforated protective film (2) to a surface of at least one component (5) using an apparatus which comprises a base frame (1), a receptacle (3.01) for a supply roller (3) comprising a protective film (2), at least one component receptacle (11) for receiving the at least one component (5) and a pressure roller (6),
comprising the following steps:
a) configuring the at least one component receptacle (11) at a setting angle with respect to the base frame (1);
b) arranging the supply roller (3) comprising the protective film (2) in such a way that the unrolled protective film (2) is at approximately the same setting angle with respect to the base frame (1);
c) placing and fixing the at least one component (5) ;
d) unrolling the protective film (2) via at least one deflecting roller (4) which spans the protective film (2), and positioning and fixing the unrolled protective film (2) so as not to contact the at least one component (5);
e) applying the protective film (2) to the at least one component (5) by means of the pressure roller (6), which is guided over the at least one component (5) and is kept in position by at least one counterweight (6.04);
f) severing the protective film (2) above the at least one component (5) and removing excess parts of the protective film (2);
g) removing the component (5) with applied film from the component receptacle (11).

2. Method according to Claim 1, **characterized in that** the setting angle between the component receptacle (11) and the base frame (1) is between 30 and 60 degrees, preferably 45 degrees.

3. Apparatus for applying a perforated protective film (2) to a surface of at least one component (5), comprising a base frame (1), a receptacle (3.01) for a supply roller (3) comprising a protective film (2), at least one component receptacle (11) for receiving the at least one component (5) and a pressure roller (6), **characterized in that**
the component receptacle (11) is arranged at a setting angle with respect to the base frame (1), and
**in that** means for guiding (1.06) the protective film (2) are arranged in such a way that the unrolled protective film (2) is at approximately the same setting angle with respect to the base frame (1), wherein the means for guiding (1.06) the protective film (2) are connected to at least one side support (1.03) arranged perpendicularly with respect to the base frame (1).

4. Apparatus according to Claim 3, **characterized in that** the component receptacle (11) is arranged at a setting angle of between 30 and 60 degrees, preferably 45 degrees, with respect to the base frame (1).

5. Apparatus according to Claim 3 or 4, **characterized in that** the pressure roller (6) is kept in position above the component (5) by at least one counterweight (6.04; 7.02).

6. Apparatus according to one of the preceding Claims 3 to 5, **characterized in that**
the pressure roller (6) is arranged on a bridge structure (6.01) which is pivotably connected to the base frame (1) at the sides and in the rear third of the base frame (1), wherein pivot points (6.07) for the bridge structure (6.01) can be adjusted in accordance with the setting angle of the component receptacle (11).

7. Apparatus according to Claim 6, **characterized in that** the at least one counterweight (6.04) is connected, by way of a webbing (6.06), to the bridge structure (6.01) via a deflecting element (6.05).

8. Apparatus according to one of the preceding Claims 3 to 5, **characterized in that**
the pressure roller (6) is mounted on a carriage (7) which is guided, on linear guides (7.01), to the right and left of the component receptacle (11) at approximately the same setting angle as the component receptacle (11), and **in that** a guide roller (7.06) is mounted above the carriage (7) so as to be settable,
wherein the protective film (2) is guided below the guide roller (7.06) and the distance between the protective film (2) and the component (5) is set by displacement of the guide roller (7.06).

9. Apparatus according to Claim 8, **characterized in that** counterweights (7.02) are arranged on the rear side of each of the linear guides (7.01) and are each connected, by way of a webbing (7.03), to the carriage (7) via a deflecting element (7.05).

## Revendications

1. Procédé d'application d'au moins un Film de protection perforé (2) sur la surface d'au moins un composant (5) en utilisant un dispositif, qui comprend un châssis de base (1), un logement (3.01) pour un rouleau d'approvisionnement (3) avec un film de protection (2), au moins un logement de composant (11) pour la réception d'au moins un composant (5) et un rouleau de pression (6),
comprenant les étapes suivantes :
a) l'installation d'au moins un logement de composant (11) selon un angle de réglage par rapport au Châssis de base (1) ;
b) l'agencement du rouleau d'approvisionnement (3) avec le film de protection (2) de telle sorte que le film de protection (2) déroulé se trouve approximativement selon le même angle de réglage par rapport au Châssis de base (1) ;
c) la mise en place et la fixation de D'au moins un composant (5) ;
d) le déroulement du film protecteur (2) par l'intermédiaire d'au moins une poulie de renvoi (4), qui tend le film de protection (2), ainsi que le positionnement et la fixation du film protecteur déroulé (2) sans toucher au moins un composant (5) ;
e) l'application du film protecteur (2) sur au moins un composant (5) au moyen du rouleau presseur (6), qui est guidé par l'intermédiaire d'au moins un composant (5) en étant maintenu en position par au moins un contrepoids (6.04) ;
f) la séparation du film protecteur (forme pré perforée) (2) au-dessus d'au moins un composant (5) et l'élimination (échenillage) de parties excédentaires du film protecteur (2) ;
g) l'enlèvement du composant appliqué (5) du logement de composant (11).

2. Procédé selon la revendication 1, **caractérisé en ce que** l'angle de réglage entre le logement de composant (11) et le châssis de base (1) est compris entre 30 et 60 degrés, de préférence 45 degrés.

3. Dispositif pour l'application d'une étiquette protectrice perforée (2) sur la surface d'au moins un composant (5), qui comprend un Châssis de base (1), un logement (3.01) pour un rouleau d'approvisionnement (3) avec un film protecteur (2), au moins un logement de composant (11) pour le logement d'au moins un composant (5) et un rouleau presseur (6), **caractérisé en ce que**
le logement de composant (11) est agencé selon un angle de réglage par rapport au châssis de base (1) et
**en ce que** les moyens de guidage (1.06) du film protecteur (2) soient agencés de telle sorte que le film protecteur déroulé (2) se trouve approximativement selon le même angle de réglage par rapport au châssis de base (1),
les moyens de guidage (1.06) du film protecteur (2) étant reliés à au moins un support latéral (1.03) agencé perpendiculairement sur le châssis de base (1).

4. Dispositif selon la revendication 3, **caractérisé en ce que** le logement de composant (11) agencé selon un angle de réglage par rapport au châssis de base (1) compris entre 30 et 60 degrés, de préférence 45 degrés.

5. Dispositif selon la revendication 3 ou 4, **caractérisé en ce que** le rouleau presseur (6) soit maintenu en position au-dessus du composant (5) par au moins un contrepoids (6.04 ; 7.02).

6. Dispositif selon l'une des revendications 3 à 5 précédentes, **caractérisé en ce que** le rouleau presseur (6) soit agencé sur une structure de pont (6.01), qui est reliée au châssis de base (1) de manière à pouvoir pivoter latéralement et dans le tiers arrière du châssis de base (1), des points de rotation (6.07) pour la structure de pont (6.01) pouvant être ajustés en fonction de l'angle de réglage du logement de composant (11).

7. Dispositif selon la revendication 6, **caractérisé en ce qu'**au moins un contrepoids (6.04) soit relié au niveau d'une sangle (6.06) par l'intermédiaire d'un renvoi déflectif(6.05) avec la structure de pont (6.01).

8. Dispositif selon l'une des revendications 3 à 5 précédentes, **caractérisé en ce que** le rouleau presseur (6)soit monté sur un chariot (7), qui est guidé à droite et à gauche du logement de composant (11) sur des guides linéaires (7.01) selon approximativement le même angle de réglage que le logement de composant (11) et **en ce qu'**un galet de guidage (7.06) soit monté de façon réglable au-dessus du chariot (7),
Le film protecteur (2) étant guidé en dessous du galet de guidage (7.06) et la distance entre le film protecteur (2) et le composant (5) étant réglée par déplacement du galet de guidage (7.06).

9. Dispositif selon la revendication 8, **caractérisé en ce que** des contrepoids (7.02) soient agencés respectivement sur le côté arrière des guides linéaires (7.01), lesquels sont respectivement reliés au chariot (7) au niveau d'une sangle (7.03) par l'intermédiaire d'un renvoi déflectif (7.05).
